(19) Europäisches Patentamt
European Patent Office
Office européen des brevets

(11) EP 4 036 049 A1

(12) EUROPÄISCHE PATENTANMELDUNG

(43) Veröffentlichungstag:
**03.08.2022 Patentblatt 2022/31**

(21) Anmeldenummer: **22156193.9**

(22) Anmeldetag: **06.03.2019**

(51) Internationale Patentklassifikation (IPC):
***B66D 1/46*** ***(2006.01)*** ***B66D 1/54*** ***(2006.01)***
***B66C 13/26*** ***(2006.01)***

(52) Gemeinsame Patentklassifikation (CPC):
**B66D 1/54; B66C 13/26; B66D 1/46**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2018 DE 102018105139**

(62) Dokumentnummer(n) der früheren Anmeldung(en) nach Art. 76 EPÜ:
**19711262.6 / 3 762 324**

(71) Anmelder: **Konecranes Global Corporation**
**05830 Hyvinkää (FI)**

(72) Erfinder: **NEUBAUER, Dirk**
**58300 Wetter (DE)**

(74) Vertreter: **Moser Götze & Partner Patentanwälte mbB**
**Paul-Klinger-Strasse 9**
**45127 Essen (DE)**

Bemerkungen:
Diese Anmeldung ist am 10.02.2022 als Teilanmeldung zu der unter INID-Code 62 erwähnten Anmeldung eingereicht worden.

# (54) VERFAHREN ZUR STEUERUNG UND INSBESONDERE ÜBERWACHUNG EINES AKTORS EINER WINDE, EINES HEBEZEUGS ODER EINES KRANS UND SYSTEM ZUR DURCHFÜHRUNG EINES SOLCHEN VERFAHRENS

(57) Die Erfindung betrifft ein Verfahren zur Steuerung eines Aktors (1), insbesondere eines Aktors (1) einer Winde, eines Hebezeugs oder eines Krans, wobei der Aktor (1) über eine fehlersichere Steuerungseinheit (2) angesteuert wird.

Um ein entsprechendes Verfahren zu verbessern, wird vorgeschlagen, dass in der fehlersicheren Steuerungseinheit (2) Soll-Werte berechnet werden, auf deren Basis der Aktor (1) angesteuert wird, wobei auf eine Rückführung von Ist-Werten an die fehlersichere Steuerungseinheit (2) über einen Hardware-Kanal (3a) einer Sensorik (3) verzichtet wird und insbesondere eine geberlose Überwachung erfolgt.

Auch betrifft die Erfindung ein System zur Durchführung eines solchen Verfahrens.

2
3b
2a
4
3
3a
1, 1a
3d
Sollwert-vorgabe durch Funk-steuerung
Rampen/ Positions-berechnung in fehler-sicherer Steuerung
Rampen-ausgabe an Umrichter

Fig. 2

EP 4 036 049 A1

## Beschreibung

Die Erfindung betrifft ein Verfahren zur Steuerung eines Aktors, insbesondere einer Winde, eines Hebezeugs oder eines Krans, wobei der Aktor über eine fehlersichere Steuerungseinheit angesteuert wird.

Auch betrifft die Erfindung ein System zur Durchführung eines solchen Verfahrens.

Sicherheitsfunktionen von Winden, Hebezeugen und Kranen haben besonderen Sicherheitsstandards zu genügen. Normvorgaben für Sicherheitsfunktionen von Kranen beziehungsweise von deren Aktoren und der zugehörigen Steuerungseinheiten ergeben sich beispielsweise aus der DIN EN ISO 13849, DIN EN 14492-2 und der DIN EN 15011. Als Grundsatz jeder Sicherheitsfunktion von Kranen wird das zuverlässige Erreichen eines sicheren Zustands definiert, in dem insbesondere Antriebsachsen des Krans sicher stillgesetzt sind. Hierfür muss die Steuerungseinheit sicherstellen, dass der treibende Aktor der jeweiligen Antriebsachse abgestellt wird und dass anschließend der Aktor einer Haltebremse ein Halten der Position der Antriebsachse durch mechanische Bremskraft der Haltebremse bewirkt. Gemäß der oben genannten Normen sind zu diesem Zweck Sicherheitsniveaus zu erfüllen, die über so genannte Steuerungskategorien und Performance Level definiert werden. Steuerungskategorien beziehen sich auf die Struktur der jeweiligen Steuerungseinheit und schreiben beispielsweise im Fall der Steuerungskategorie 3 eine redundante Struktur vor. Die redundante Struktur soll sicherstellen, dass ein Fehler nicht zum Verlust der jeweiligen Sicherheitsfunktion führt. Dementsprechend sind beispielsweise zwei separate Vorendschalter beziehungsweise zwei separate Endschalter für Aktoren von Kranantriebsachsen vorzusehen. Performance Level beziehen sich auf die Güte der Bauteile der Steuerungseinheit. In diesem Zusammenhang betrifft die vorliegende Erfindung so genannte fehlersichere Steuerungseinheiten, die zumindest die Anforderungen gemäß Steuerungskategorie 3 und Performance Level d erfüllen.

Eine Sicherheitsfunktion ist beispielsweise eine sichere Geschwindigkeitsreduzierung beim Erreichen eines Vorendschalters. In diesem Zusammenhang werden bei bekannten Kranen treibende Aktoren, die beispielsweise Teil von frequenzumrichtergesteuerten Antriebsmotoren sind, über eine fehlersichere Steuerungseinheit angesteuert und überwacht. Hierbei werden im Frequenzumrichter und somit außerhalb der fehlersicheren Steuerungseinheit als Soll-Werte für Bewegungen des Krans rampenförmige Soll-Geschwindigkeitsverläufe berechnet und auf deren Basis der Aktor beziehungsweise Antriebsmotor angesteuert. Die durch die fehlersichere Steuerungseinheit vorgenommene Überwachung des Aktors beziehungsweise dessen Ausführung der Soll-Werte erfolgt hierbei statisch, indem von einer zweikanaligen Sensorik Ist-Werte ermittelt werden, die in der fehlersicheren Steuerungseinheit mit fest vorgegebenen Schwellen verglichen werden. Um zumindest den Anforderungen gemäß Steuerungskategorie 3 und Performance Level d zu genügen, müssen der fehlersicheren Steuerungseinheit für eine sichere Überwachung des Aktors verlässliche Ist-Werte zur Verfügung stehen, da im Sinne der obigen Norm die Soll-Wert-Berechnung im Frequenzumrichter als unsicher angesehen wird. Für eine in diesem Sinne verlässliche Ermittlung von Ist-Werten in Form von Ist-Geschwindigkeiten umfasst die Sensorik bei derartigen bekannten Krananlagen zwei Hardware-Kanäle mit jeweils einem Geschwindigkeitssensor oder Sondergeber und entsprechender Auswerteeinheit mit einem Impulszähler in Form einer so genannten Counterkarte. Jeder Hardware-Kanal kann anstelle eines Geschwindigkeitssensors oder Gebers und Impulszählers ein Absolutwertmesssystem aufweisen. Als Absolutwertmesssystem kann beispielsweise ein Lasersensor zur absoluten Abstands- und Positionsmessung in Verbindung mit einer so genannten Analogwertkarte eingesetzt werden. Jeder Hardware-Kanal dient hierbei jeweils getrennt voneinander der Ermittlung und Rückführung von entsprechenden Ist-Werten an die fehlersichere Steuerungseinheit.

Hiervon ausgehend liegt der vorliegenden Erfindung die Aufgabe zugrunde, ein verbessertes Verfahren zur Steuerung eines Aktors sowie ein verbessertes System zur Durchführung eines solchen Verfahrens bereitzustellen, die jeweils besonders einfach ausgestaltet und sicher sind.

Diese Aufgabe wird durch ein Verfahren mit den Merkmalen des Anspruchs 1 und ein System mit den Merkmalen des Anspruchs 10 gelöst. Vorteilhafte Ausgestaltungen sind in den abhängigen Ansprüchen und der nachfolgenden Beschreibung angegeben.

Erfindungsgemäß wird ein Verfahren zur Steuerung eines Aktors, insbesondere eines Aktors einer Winde, eines Hebezeugs oder eines Krans, wobei der Aktor über eine fehlersichere Steuerungseinheit angesteuert wird, dadurch verbessert, dass in der fehlersicheren Steuerungseinheit Soll-Werte berechnet werden, auf deren Basis der Aktor angesteuert wird.

Als fehlersichere Steuerungseinheit wird hierbei vorzugsweise eine so genannte speicherprogrammierbare Steuerung eingesetzt, die auch als SPS oder PLC bezeichnet wird. Die in der fehlersicheren Steuerungseinheit insbesondere mittels eines Rampengenerators beziehungsweise Positionshochlaufgebers als Führungsgröße berechneten Soll-Werte können in diesem Zusammenhang Soll-Geschwindigkeiten, insbesondere in Form von rampenförmigen Soll-Geschwindigkeitsverläufen, und/oder relative oder absolute Soll-Positionen sein, die über den Aktor erreicht werden können, indem dieser entsprechende Bewegungen von beweglichen Teilen einer Winde, eines Hebezeug oder eines Krans in den möglichen Bewegungsrichtungen bewirkt, die dann insbesondere mit den rampenförmigen Geschwindigkeiten ausgeführt werden.

Die Soll-Werte beziehen sich dementsprechend auf horizontale Bewegungen eines Krans in X- und Y-Richtung und dessen vertikale Bewegungen in Z-Richtung. Die X-, Y-, und Z-Richtungen beziehen sich hierbei auf ein kartesisches Koordinatensystem. Die horizontalen X-Y-Bewegungen können bei einem Laufkran insbesondere Bewegungen eines Kranträgers sein, die üblicherweise rechtwinklig zur horizontalen Längserstreckung des Kranträgers erfolgen, beziehungsweise einer in Richtung der Längserstreckung am Kranträger entlang verfahrenden Krankatze. Die vertikalen Z-Bewegungen sind insbesondere Hub- oder Senkbewegungen des Lastaufnahmemittels eines an der Krankatze angeordneten Hubwerks einschließlich der ggf. am Lastaufnahmemittel befestigten Last. Im Falle einer Winde mit ortsfester Zugvorrichtung oder im Falle eines Hebezeugs mit ortsfestem Hubwerk sind die Bewegungen entsprechend eindimensionale Zugbewegungen in der jeweiligen Wirkrichtung der Winde beziehungsweise des Hebezeugs. Die im Rahmen der vorliegenden Erfindung betrachtete Steuerung und insbesondere Überwachung von Aktoren bezieht sich somit insbesondere auf die treibenden Aktoren der jeweiligen Antriebe beziehungsweise Antriebsmotoren und zugehörige Antriebsachsen, die eine Winde, ein Hebezeug, oder ein Kran aufweist, um entsprechende Bewegungen im Sinne der berechneten Soll-Werte ausführen zu können. Hierzu zählen auch Aktoren eines eventuell vorgesehenen Drehwerks oder Wippwerks eines Krans. Die Antriebsmotoren sind hierbei üblicherweise als Elektromotoren ausgebildet, wobei sie entweder vom Typ frequenzumrichtergesteuerter Elektromotoren oder vom Typ polumschaltbarer und insbesondere netzgeführter Elektromotoren sein können.

Sofern bei polumschaltbaren und insbesondere netzgeführten Elektromotoren die treibenden Aktoren über Schalter in Form von Schaltschützen gesteuert werden, können die hierfür in der fehlersicheren Steuerungseinheit berechneten Soll-Werte auch Soll-Stellungen für die Schalter beziehungsweise Schaltschütze sein. Die Soll-Stellungen können hierbei einer langsamen und einer schnellen Geschwindigkeit und/oder einander entgegengesetzten Bewegungsrichtungen entsprechen.

Darüber hinaus lässt sich das erfindungsgemäße Verfahren in vorteilhafter Weise unabhängig von der vorhandenen Peripherie, das heißt unabhängig vom vorhandenen Typ der Elektromotoren, in einer fehlersicheren Steuerungseinheit hinterlegen. Dies ermöglicht eine besonders wirtschaftliche und die Sicherheit erhöhende Umrüstung von bestehenden Kranlagen. Auch Neuanlagen können bereits von vornherein mit entsprechender Sicherheit eingerichtet werden.

In vorteilhafter Weise ist außerdem vorgesehen, dass der Aktor mittels der fehlersicheren Steuerungseinheit überwacht wird und zur Überwachung des jeweiligen Aktors in der fehlersicheren Steuerungseinheit die Soll-Werte, auf deren Basis der Aktor angesteuert wird, mit Ist-Werten verglichen werden, die über eine Sensorik ermittelt werden. Die erfindungsgemäß in der fehlersicheren Steuerungseinheit erfolgende Berechnung der genannten Soll-Werte bewirkt hierbei in vorteilhafter Weise, dass die fehlersichere Steuerungseinheit im Rahmen der Überwachung von Aktoren Erwartungen berücksichtigen kann, die auf den sicher berechneten Soll-Werten basieren und somit "vertrauenswürdig" sind.

In diesem Zusammenhang ist gemäß einer Ausführungsform auch vorgesehen, dass eine Rückführung von Ist-Werten an die fehlersichere Steuerungseinheit über einen einzigen Hardware-Kanal der Sensorik erfolgt, der den Aktor mit der fehlersicheren Steuerungseinheit verbindet und auch nur einen einzigen Wegerfassungssensor beispielsweise in Form eines Gebers oder eines Absolutwertmesssystems im obigen Sinne aufweist. Anstelle eines Wegerfassungssensors kann auch ein Geschwindigkeitssensor eingesetzt werden.

Die von dem jeweiligen Sensor als Rückführgröße ermittelten und der fehlersicheren Steuerungseinheit für die Überwachung zur Verfügung stehenden Ist-Werte sind in diesem Fall vorzugsweise Ist-Positionen und/oder Ist-Geschwindigkeiten beziehungsweise Ist-Geschwindigkeitsverläufe. Die ermittelten Ist-Positionen können je nach Art des Wegerfassungssensors wiederum relative oder absolute Positionen sein. Im Falle eines als Geber, insbesondere Inkrementalgeber oder Sondergeber, ausgebildeten Wegerfassungssensors beziehen sich die relativen Positionen auf den Zählbeginn der Geberimpulse beziehungsweise der zugehörigen Auswerteeinheit der Sensorik, mittels der die Geberimpulse erfasst werden. Die relativen Ist-Positionen können beispielsweise in der fehlersicheren Steuerungseinheit aus den signalförmig rückgeführten und die Ist-Werte repräsentierenden Impulsen beziehungsweise Inkrementalwerten des entsprechenden Gebers berechnet werden. Alternativ kann der Wegerfassungssensor auch ein Absolutwertmesssystem sein, das absolute Ist-Positionen liefert. Denkbar ist hierfür beispielsweise der Einsatz eines auch als Absolutwertlaser bezeichneten Lasersensors zur absoluten Abstands- und Positionsmessung, der zum Beispiel nach dem Prinzip der Lichtlaufzeitmessung arbeitet. Anstelle eines Impulszählers in Form einer Counterkarte kann die Auswerteeinheit der Sensorik dann eine so genannte Analogwertkarte aufweisen oder als Busanschluss im Sensor integriert sein. Für einen Vergleich mit Soll-Geschwindigkeiten beziehungsweise Soll-Geschwindigkeitsverläufen können aus Änderungen der ermittelten Ist-Positionen Ist-Geschwindigkeiten berechnet werden. Hierfür sind dann in der fehlersicheren Steuerungseinheit für die Berechnung erforderliche Daten wie beispielsweise Getriebefaktoren, Raddurchmesser von Fahrwerken, Trommeldurchmesser von Seiltrommeln oder Informationen zu einer etwaigen Einscherung hinterlegt und für die Berechnung abrufbar. Diese Daten können von der fehlersicheren Steuerungseinheit auch für die oben erwähnte Berechnung von relativen Ist-Positionen aus Impulsen beziehungsweise Inkrementalwerten des Gebers genutzt werden.

Mit anderen Worten kann also mit nur einem einzigen Hardware-Kanal zur Rückführung von Ist-Werten trotzdem ein Sicherheitsniveau gemäß Steuerungskategorie 3 und Performance Level d erreicht werden, obwohl die Ist-Werte aufgrund des fehlenden zweiten Hardware-Kanals im Sinne der oben genannten Norm "unsicher" sind. Dies ist dadurch möglich, dass die "unsicheren" Ist-Werte im Rahmen der Überwachung mit in der fehlersicheren Steuerungseinheit "sicher" berechneten Soll-Werten verglichen werden. Die gemäß Steuerungskategorie 3 und Performance Level d zu erfüllende Zweikanaligkeit der Sensorik im Sinne der Norm ist hierbei dadurch gegeben, dass neben dem einzigen Hardware-Kanal zur Ermittlung und Rückführung von Ist-Werten die Soll-Wert-Berechnung in der fehlersicheren Steuerungseinheit als zweiter Kanal der Sensorik dient. Der zweite Kanal der Sensorik ist erfindungsgemäß also ein reiner Software-Kanal innerhalb der fehlersicheren Steuerungseinheit, so dass gegenüber dem Stand der Technik ein zweiter Hardware-Kanal zur Ermittlung und Rückführung von Ist-Werten und die zugehörigen Komponenten wie beispielsweise Inkrementalgeber oder Absolutwertmessvorrichtungen und zugehörige Auswerteeinheiten entfallen können. Dadurch lassen sich in vorteilhafter Weise der für ein solches Verfahren zur Steuerung und Überwachung eines Aktors erforderliche Hardware-Aufwand und die damit zusammenhängenden Komponentenkosten erheblich verringern. Demgegenüber sind bei den bekannten Kranen zwei Hardware-Kanäle zur separaten Ermittlung und Rückführung von Ist-Werten erforderlich, da dort aufgrund der "unsicheren" Soll-Wert-Berechnung außerhalb der fehlersicheren Steuerungseinheit im Frequenzumrichter die fehlersichere Steuerungseinheit keine Geschwindigkeiten, Positionen oder Stellungen erwartet, sondern im Rahmen der Überwachung lediglich gemessene Ist-Werte berücksichtigen und verarbeiten kann.

In vorteilhafter Weise ist außerdem vorgesehen, dass die Berechnung der Soll-Werte, die Ermittlung der Ist-Werte und der Vergleich der Soll-Werte mit den Ist-Werten jeweils zyklisch erfolgt, vorzugsweise in einem Zyklus von 10ms bis 100ms, besonders bevorzugt in einem Zyklus von 20ms bis 50ms. Die Steuerung und insbesondere die Überwachung des jeweiligen Aktors erfolgt dadurch nicht statisch und nicht anhand fest vorgegebener Schwellen, sondern dynamisch und kontinuierlich.

Eine sichere Geschwindigkeits- oder Positionsüberwachung lässt sich zudem dadurch erreichen, dass ein einstellbares Zeitintervall eines Zeitglieds gestartet und das eingestellte Zeitintervall abgewartet wird, wenn die Ist-Werte einen relativ zu den Soll-Werten vorgegebenen Toleranzbereich verlassen, und der überwachte Aktor abgestellt wird, wenn die Ist-Werte auch nach Ablauf des Zeitintervalls außerhalb des Toleranzbereichs liegen. Der Toleranzbereich entspricht hierbei einer Hysterese um die jeweiligen Soll-Werte. Wenn innerhalb des eingestellten Zeitintervalls die Ist-Werte wieder innerhalb des Toleranzbereichs liegen, wird der überwachte Aktor nicht abgestellt. Bei einem erneuten Verlassen des Toleranzbereichs wird das Zeitintervall erneut gestartet.

Alternativ oder zusätzlich können die in der fehlersicheren Steuerungseinheit berechneten Soll-Werte auch Soll-Stellungen für eine Haltebremse einer Winde, eines Hebezeugs oder eines Krans sein, insbesondere eine geschlossene und eine geöffnete Stellung der Haltebremse. Auch kann es sich um Soll-Stellungen für einen Endschalter, insbesondere Vorendschalter, beispielsweise eines Fahrantriebs der Katzfahrwerksachse eines Krans handeln. Dementsprechend kann der erfindungsgemäß angesteuerte und überwachte Aktor nicht nur im obigen Sinne als treibender Aktor Teil eines Antriebsmotors sein, sondern auch als Stellglied Teil einer Haltebremse oder ein Endschalter beziehungsweise Vorendschalter sein. Im Fall einer Haltebremse kann das Stellglied beispielsweise ein Bremsschütz der Haltebremse sein. Hierfür ist dann eine geeignete Sensorik vorgesehen, um Ist-Stellungen des Stellglieds der Haltebremse beziehungsweise des Endschalters/Vorendschalters zu ermitteln.

Insbesondere wenn eine Antriebsachse, beispielsweise eine Katzfahrwerksachse, mit einem einzigen als Absolutwertmessvorrichtung ausgebildeten Wegerfassungssensor versehen wird, ist ein endschalterloses Verfahren der Antriebsachse beziehungsweise des entsprechenden treibenden Aktors möglich, so dass auf Endschalter verzichtet werden kann. Hierzu wird dann wie zuvor beschrieben die von der Sensorik ermittelte und über den einzigen Hardware-Kanal als Rückführgröße übermittelte absolute Ist-Position verwendet, um in der fehlersicheren Steuerungseinheit die Umsetzung der Soll-Werte zu überwachen, die beispielsweise als rampenförmiger Soll-Geschwindigkeitsverlauf berechnet wurden und bis zum Erreichen der Endposition eine Geschwindigkeitsreduzierung bis zum Stillstand vorsehen. Hierbei sind dann die Endpositionen im Soll-Geschwindigkeitsverlauf berücksichtigt. Dieses Verfahren ist insbesondere dann vorteilhaft, wenn beispielsweise aufgrund von Platzmangel keine zwei Wegerfassungssensoren angebracht werden können. Auch hier ist also eine vorteilhafte Verringerung der Komponentenkosten möglich.

Eine weitere Sicherheitsfunktion kann in vorteilhafter Weise dadurch realisiert werden, dass der angesteuerte und insbesondere überwachte Aktor ein treibender Aktor ist und ein zweiter Aktor angesteuert und überwacht wird, der zweite Aktor als Stellglied einer Haltebremse ausgebildet ist, zur Steuerung und Überwachung des zweiten Aktors in Abhängigkeit der für den treibenden Aktor berechneten Soll-Werte ein einstellbares Zeitintervall eines Zeitglieds gestartet und das eingestellte Zeitintervall abgewartet wird, und der treibende Aktor abgestellt wird, wenn eine insbesondere von der entsprechenden Sensorik ermittelte Ist-Stellung des zweiten Aktors auch nach Ablauf des Zeitintervalls nicht einer Soll-Stellung des zweiten Aktors entspricht. Der treibende Aktor ist in diesem Fall beispielsweise Teil eines Hubwerks beziehungsweise der zugehörigen Antriebsachse.

Mittels des zuvor beschriebenen Verfahrens kann ein Defekt des Stellglieds schon bei Stillstand der Antriebsachse erkannt werden und nicht erst bei Lastabsturz.

Des Weiteren kann vorgesehen sein, dass der angesteuerte und insbesondere überwachte Aktor ein treibender Aktor ist und zusätzlich über die fehlersichere Steuerungseinheit ein Endschalter in Abhängigkeit der für den treibenden Aktor berechneten Soll-Werte überwacht wird und insbesondere der treibende Aktor verlangsamt oder abgestellt wird, wenn eine insbesondere von der entsprechenden Sensorik ermittelte Ist-Stellung des überwachten Endschalters bei Erreichen eines vorgegebenen Soll-Werts des treibenden Aktors nicht einer Soll-Stellung des Endschalters entspricht. Bei der Überwachung von zwei Endschaltern wird deren Ansprechen nicht durch einen zeitlichen Vergleich mittels eines Zeitglieds überwacht, sondern auf Basis einer Positionsberechnung. Hierbei kann dann als Soll-Wert eine Wegstrecke eingestellt werden und überprüft werden, ob ausgehend von dem Ansprechen des ersten Endschalters mit beziehungsweise nach dem Erreichen des Soll-Werts auch der zweite Endschalter angesprochen hat. Falls nicht, wird der treibende Aktor entsprechend verlangsamt oder abgestellt. Der jeweilige Endschalter kann hierbei wie oben bereits erwähnt auch ein Vorendschalter sein, so dass zunächst nur ein Abbremsen zur Geschwindigkeitsreduzierung beziehungsweise -verlangsamung erfolgt und noch kein vollständiges Abstellen beziehungsweise Anhalten des entsprechenden Aktors.

Sowohl im Rahmen der Überwachung des beschriebenen endschalterlosen Verfahrens als auch im Rahmen der Überwachung des Stellglieds der Haltebremse oder des Endschalters werden also in der fehlersicheren Steuerungseinheit Erwartungen berücksichtigt, die auf den sicher berechneten Soll-Werten basieren und somit "vertrauenswürdig" sind. Auf Basis der Erwartungen wird dann im Sinne einer Fehlererkennung das Ansprechen des jeweiligen Aktors beziehungsweise Endschalters auf den vorgegebenen Soll-Wert beziehungsweise die vorgegebene Soll-Stellung überprüft.

Insbesondere aufgrund der "Vertrauenswürdigkeit" der sicher berechneten Soll-Werte kann in einer alternativen Ausführungsform auch auf jegliche Rückführung von Ist-Werten an die fehlersichere Steuerungseinheit und somit auf eine Überwachung im herkömmlichen Sinne verzichtet werden. Es findet vielmehr eine so genannte geberlose Überwachung statt, bei der dementsprechend kein Hardware-Kanal zur Rückführung mehr erforderlich ist. Hierfür ist im Falle von treibenden Aktoren, die Teil eines frequenzumrichtergesteuerten Elektromotors sind, eine geeignete Parametrierung des Umrichters vorzunehmen. Die Parametrierung erfolgt dann derart, dass bewusst eine Manipulation der Ist-Werte im Umrichter hervorgerufen und dann über eine Kommunikationsschnittstelle beziehungsweise Steuerleitung zur Signalübertragung an die fehlersichere Steuerungseinheit übertragen wird. Die fehlersichere Steuerungseinheit kennt das vorgegebene Manipulationsverfahren des Umrichters und korrigiert die Manipulation für ihre Überwachung. Im Falle von treibenden Aktoren, die Teil eines polumschaltbaren und insbesondere netzgeführten Elektromotors sind, ist ebenfalls - wie auch schon zuvor - keine entsprechende Rückführung vorgesehen.

Auch ein System zur Steuerung und insbesondere Überwachung eines Aktors, insbesondere eines Aktors einer Winde, eines Hebezeugs oder eines Krans, und einer fehlersicheren Steuerungseinheit, wobei der Aktor über die fehlersichere Steuerungseinheit angesteuert und insbesondere überwacht werden kann, kann dadurch verbessert werden, dass das System ausgebildet und eingerichtet ist, um ein erfindungsgemäßes Verfahren insbesondere im zuvor beschriebenen Sinne durchzuführen. Die hinsichtlich des Verfahrens erreichten Vorteile gelten analog für ein derartiges System.

Die Erfindung wird anhand der nachfolgenden Figuren beschrieben. Es zeigen:

Figur 1 ein System zur Steuerung und Überwachung eines treibenden Aktors gemäß dem Stand der Technik,
Figur 2 ein erfindungsgemäßes System zur Steuerung und Überwachung des treibenden Aktors aus Figur 1,
Figur 3 eine schematische Darstellung von mittels der fehlersicheren Steuerungseinheit berechneten Soll-Werten in Form einer Geschwindigkeitsrampe,
Figur 4 eine schematische Darstellung der mittels der fehlersicheren Steuerungseinheit erfolgenden Positionsüberwachung eines Aktors und
Figur 5 eine schematische Darstellung der mittels der fehlersicheren Steuerungseinheit erfolgenden Bremsschützüberwachung.

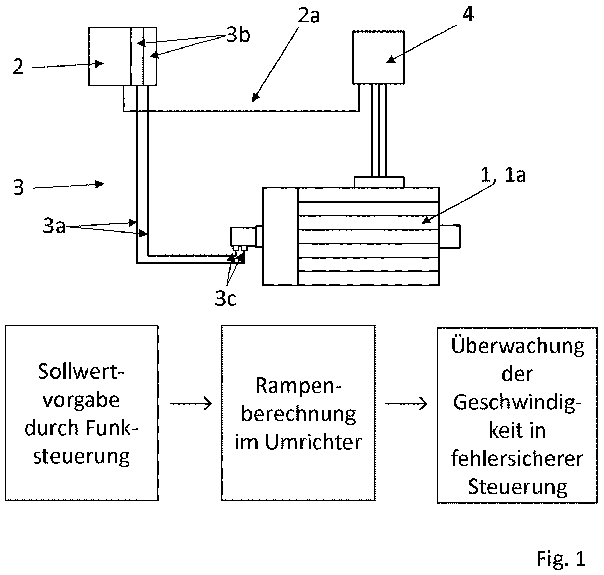

Die Figur 1 zeigt ein System zur Steuerung und Überwachung eines treibenden Aktors 1 gemäß dem eingangs bereits beschriebenen Stand der Technik. Der Aktor 1 ist hierbei Teil eines Elektromotors 1a, der beispielhaft als frequenzumrichtergesteuerter Elektromotor ausgebildet ist und ein Antriebsmotor einer Winde, eines Hebezeugs oder eines Krans sein kann. Über ein auch als Steuerstelle bezeichnetes Bedienteil (nicht dargestellt), das zum Beispiel eine Funkfernbedienung beziehungsweise Funksteuerung sein kann, ist es möglich den Aktor 1 anzusteuern, indem durch Betätigung eines Bedienelements des Bedienteils Steuerbefehle für den Aktor 1 vorgegeben werden können. Die Steuerbefehle können beispielsweise lauten "Bewegung mit maximaler Geschwindigkeit in Vorwärtsrichtung" oder "Bewegung mit Geschwindigkeit 1m/min in Rückwärtsrichtung". Ausgehend von dem Bedienteil werden dem jeweiligen Steuerbefehl entsprechende Signale von einer fehlersicheren Steuerungseinheit 2 über eine Steuerleitung 2a an einen als Frequenzumrichter ausgebildeten Umrichter 4 übertragen, der zur eigentlichen Ansteuerung des Aktors 1 dient. Im Umrichter 4 erfolgt anhand der vorgegebenen Steuerbefehle eine Berechnung von Soll-Werten in Form eines rampenförmigen Soll-Geschwindigkeitsverlaufs. Dies wird auch als Rampenberechnung bezeichnet. Mittels der im Umrichter 4 berechneten Soll-Werte wird dann der Aktor 1 angesteuert.

Die Überwachung des Aktors 1, das heißt dessen tatsächliche Ausführung der Soll-Werte, erfolgt wie oben bereits beschrieben statisch durch die fehlersichere Steuerungseinheit 2, indem von einer zweikanaligen Sensorik 3 Ist-Werte ermittelt werden, die in der fehlersicheren Steuerungseinheit 2 mit fest vorgegebenen Schwellen verglichen werden. Die Sensorik 3 umfasst hierfür zwei Hardware-Kanäle 3a mit jeweils einem dem Aktor 1 zugeordneten Geschwindigkeitssensor 3c oder Sondergeber und entsprechender Auswerteeinheit 3b mit jeweils einem Impulszähler in Form einer so genannten Counterkarte. Die Ist-Werte werden über die Hardware-Kanäle 3a an die zugehörigen Auswerteeinheiten 3b übertragen und von den Auswerteeinheiten 3b an die fehlersichere Steuerungseinheit 2 übertragen, damit dort der Vergleich der Ist-Werte mit den vorgegebenen Schwellen erfolgen kann.

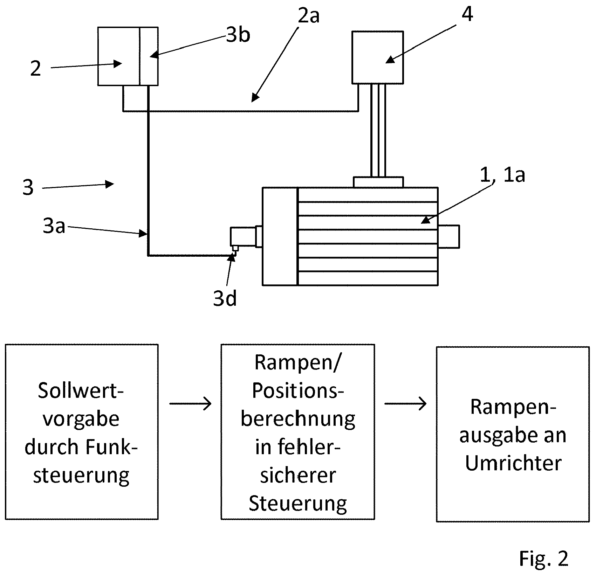

Demgegenüber zeigt die Figur 2 ein erfindungsgemäßes System zur Steuerung und Überwachung des treibenden Aktors 1 aus Figur 1. Das erfindungsgemäße System gemäß Figur 2 unterscheidet sich von demjenigen aus Figur 1 dadurch, dass die Sensorik 3 nur noch einen einzigen Hardware-Kanal 3a und einen Wegerfassungssensor 3d aufweist. Der Wegerfassungssensor 3d kann ein einfacher Inkrementalgeber zur Ermittlung relativer Ist-Positionen oder auch ein Absolutwertmesssystem zur Ermittlung absoluter Ist-Positionen sein. Anstelle des Wegerfassungssensors 3d kann auch ein Geschwindigkeitssensor 3c verwendet werden. Der im Stand der Technik gemäß Figur 1 vorhandene zweite Hardware-Kanal 3a und die zugehörigen Komponenten (Sensor beziehungsweise Geber und Auswerteeinheit) werden erfindungsgemäß durch einen oben bereits erwähnten Software-Kanal innerhalb der fehlersicheren Steuerungseinheit 2 ersetzt. In diesem Zusammenhang ist vorgesehen, dass die Rampenberechnung nicht mehr wie im Stand der Technik innerhalb des Umrichters 4, sondern innerhalb der fehlersicheren Steuerungseinheit 2 selbst erfolgt. Anschließend erfolgt eine auch als Rampenausgabe bezeichnete Übertragung des anhand der Steuerbefehle berechneten rampenförmigen Soll-Geschwindigkeitsverlaufs an den Umrichter 4, damit dieser hiermit den Aktor 1 ansteuern kann.

Die Basis des in Figur 2 schematisch dargestellten Systems ist ein so genannter sicherer Rampengenerator, der Teil der fehlersicheren Steuerungseinheit 2 ist und nach einstellbaren Parametern den auch als Geschwindigkeitsrampe bezeichneten rampenförmigen Soll-Geschwindigkeitsverlauf erstellt.

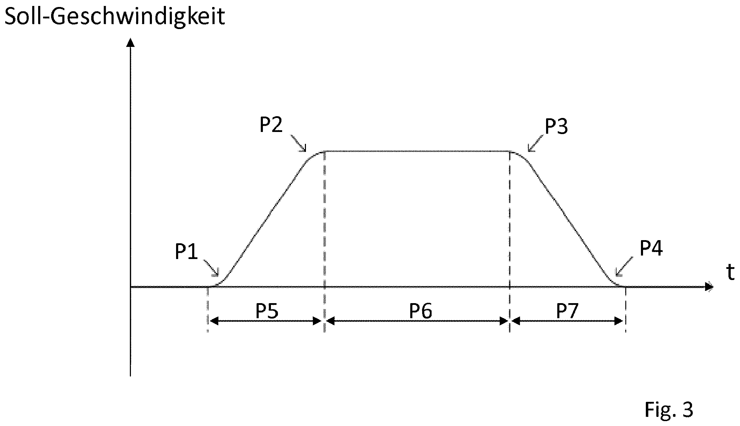

Die Figur 3 zeigt eine schematische Darstellung von mittels der fehlersicheren Steuerungseinheit 2 berechneten Soll-Werten in Form der Geschwindigkeitsrampe. Die Geschwindigkeitsrampe ist mit den Parametern P1 "Beschleunigung Verrundung Start", P2 "Beschleunigung Verrundung Ende", P3 "Verzögerung Verrundung Start", P4 "Verzögerung Verrundung Ende", P5 "Beschleunigung" und P7"Verzögerung" einzustellen. Der Soll-Wert für die Rampe, das heißt für deren Bereich P6 "Beharrung", wird von der Steuerstelle als Teil des Steuerbefehls generiert und von dem Rampengenerator mit sicheren Werten begrenzt. Die sicheren Werte können durch einen Vorendschalter vorgegeben sein, so dass mit dessen Erreichen beispielsweise eine Begrenzung auf 25% der maximal möglichen Geschwindigkeit vmax erfolgt, selbst wenn der Steuerbefehl 50% von vmax lautet. Auch bei mittels eines Lastsensors erkannter Überlast kann als sicherer Wert die Hubgeschwindigkeit auf Null begrenzt werden. Ausgehend von dem Soll-Wert für die Rampe generiert der sichere Rampengenerator beispielsweise Soll-Geschwindigkeiten zwischen -1000 und +1000 Promille, wobei Geschwindigkeiten mit negativem Vorzeichen denjenigen mit positivem Vorzeichen entgegengesetzt gerichtet sind. Eine Geschwindigkeit, die betragsmäßig 1000 Promille beträgt, entspricht hierbei der maximal möglichen Geschwindigkeit vmax und eine Geschwindigkeit die betragsmäßig 1 Promille beträgt, entspricht der minimal möglichen Geschwindigkeit vmin. Mit anderen Worten kann der Rampengenerator also Geschwindigkeitsrampen mit einer Skalierung von 1000 und entsprechender Auflösung erzeugen.

Der Ausgangswert des sicheren Rampengenerators wird an einen so genannten sicheren Positionshochlaufgeber übergeben, der ebenso wie der Rampengenerator Teil der fehlersicheren Steuerungseinheit 2 ist und zur Berechnung einer relativen und/oder absoluten Position - beispielsweise einer von dem Aktor 1 angetriebenen Achse des Kranfahrwerks oder Katzfahrwerks - dient. Hierzu wird von dem Positionshochlaufgeber eine Wegstrecke pro Programmzyklus des in der fehlersichern Steuerungseinheit 2 hinterlegten Sicherheitsprogramms berechnet und aufaddiert.

Beispiel: Aktor des Kranfahrwerks
Geschwindigkeit vmax: 63 m/min
Abtastrate Sicherheitsprogramm tFZ, ("FZ" = "Fehlersicherer Zyklus"): 50 ms
Bei konstanter Fahrt vmax ergibt sich folgende Wegstrecke sFZ vmax pro Abtastrate im Sicherheitsprogramm:

$$s_{FZ\,Vmax} = \frac{V * 1000}{60} : \frac{1000}{t_{FZ}} = \frac{63\ m/min * 1000}{60} : \frac{1000}{50\ ms} = \underline{\underline{52\ mm}}$$

Da die Geschwindigkeitsrampe auf eine Skalierung von 1000 aufgelöst ist ergibt sich bei 1 Promille Geschwindigkeit vmin folgende minimale Wegstrecke sFZ vmin pro Abtastrate im Sicherheitsprogramm:

$$s_{FZ\,Vmin} = \frac{s_{FZ\,Vmax}}{1000} = \frac{52\ mm}{1000} = \underline{\underline{0{,}052\ mm}}$$

Der sicherere Positionshochlaufgeber berechnet abhängig von dem Soll-Wert des sicheren Rampengenerators multipliziert mit der minimalen Wegstrecke pro Abtastrate sFZ vmin und der Rampenskalierung die zurückgelegte Wegstrecke.

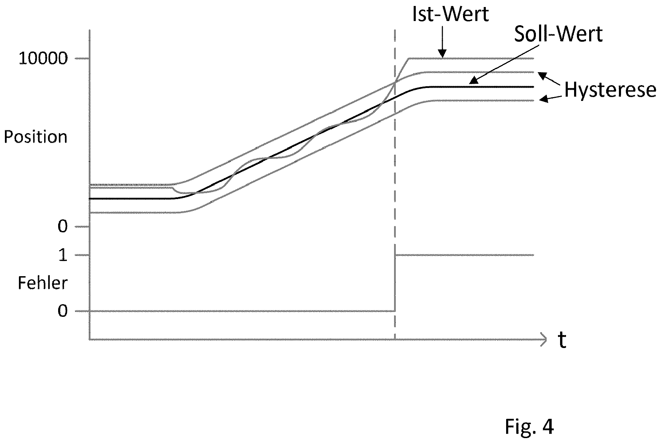

Die Figur 4 zeigt eine schematische Darstellung der mittels der fehlersicheren Steuerungseinheit 2 erfolgenden Positionsüberwachung des Aktors 1. Die Positionsüberwachung kann somit zur Fehlererkennung bezüglich des treibenden Aktors 1 genutzt werden. Die Positionsüberwachung wird mit einem Vergleichsbaustein der fehlersicheren Steuerungseinheit 2 durchgeführt. Der Vergleichsbaustein ist mit beiden Kanälen der Sensorik 3 verbunden, das heißt mit dem Software-Kanal und dem einzigen Hardware-Kanal 3a. Über den Software-Kanal wird dem Vergleichsbaustein als Führungsgröße der von dem im Sicherheitsteil der fehlersicheren Steuerungseinheit 2 vorgesehenen sicheren Positionshochlaufgeber berechnete Soll-Wert, das heißt eine entsprechende relative oder absolute Soll-Position, vorgegeben. Als Rückführgröße wird über den Hardware-Kanal 3a der von dem Wegerfassungssensor 3d ermittelte Ist-Wert, das heißt eine entsprechende relative oder absolute Ist-Position beziehungsweise ein dem Ist-Wert entsprechendes Signal übermittelt. Hierbei kann es sich um einen Inkrementalwert handeln, der der fehlersicheren Steuerungseinheit 2 zur Verfügung gestellt wird. In der fehlersicheren Steuerungseinheit 2 wird dann insbesondere anhand der Auflösung, des Getriebefaktors und des Rad-/Trommeldurchmessers mit eventueller Einscherung der Inkrementalwert in eine Ist-Position umgerechnet.

Die Führungsgröße (Soll-Position) wird nun mit der Rückführgröße (Ist-Position) in jedem Programmzyklus des Sicherheitsprogramms verglichen. Die jeweiligen Positionen sind in Figur 4 dargestellt, wobei auf der Ordinate beispielhaft ein Positions-Wertebereich von 0 bis 10000 dargestellt ist. Liegt die Abweichung der Sollund Ist-Positionen innerhalb einer einstellbaren Hysterese, wird die Position als "OK" eingruppiert. Es liegt also bezüglich des überwachten Aktors 1 kein Fehler vor, was in Figur 4 dem Fehler-Wert "0" entspricht. Verlässt die Rückführgröße die Hysterese, wird ein Zeitglied gestartet. Nach Ablauf einer einstellbaren Zeit würde die Position als "nicht OK" und somit als Fehler des überwachten Aktors 1 angesehen und der überwachte Aktor 1 abgestellt beziehungsweise zumindest gestoppt. Dies entspricht in Figur 4 dem Fehler-Wert "1". Sollte die Rückführgröße während der eingestellten Zeit wieder innerhalb der Hysterese liegen, ändert sich der Fehler-Wert wieder auf "0", ohne dass der Aktor 1 abgestellt wird. Bei einem erneuten Verlassen der Hysterese startet das Zeitglied beziehungsweise die eingestellte Zeit dann erneut. Die Hysterese wird in einem fehlersicheren Datenbaustein innerhalb der fehlersicheren Steuerungseinheit 2 konfiguriert. Eine Lagepositionsregelung im Standardprogramm der fehlersicheren Steuerungseinheit 2 sorgt dafür, dass die Soll-Position des Aktors 1 beziehungsweise der von dem Aktor 1 angetriebenen Achse eingehalten wird.

Der Aktor 1 muss hierbei nicht Teil eines frequenzumrichtergesteuerten Elektromotors 1a sein, sondern kann auch Teil eines polumschaltbaren und insbesondere netzgeführten Elektromotors 1a sein.

Die beschriebene Positionsüberwachung des treibenden Aktors 1 kann auch zur Überwachung und damit zur Fehlererkennung bezüglich eines zweiten Aktors genutzt werden, wobei der zweite Aktor als Stellglied einer Haltebremse oder als Endschalter, insbesondere Vorendschalter, ausgebildet sein kann. Im Fall der Überwachung eines Endschalters/Vorendschalters wird der treibende Aktor 1 als Teil des entsprechenden Elektromotors 1a verlangsamt oder abgestellt, wenn eine Ist-Stellung des überwachten Endschalters/Vorendschalters bei Erreichen eines vorgegebenen Soll-Werts des treibenden Aktors 1 nicht einer Soll-Stellung des Endschalters entspricht. Hier ist auch die oben beschriebene Überwachung von zwei Endschaltern durch Vorgabe einer entsprechenden Wegstrecke als Soll-Wert möglich.

Im Falle der Überwachung einer Haltebremse wird der treibende Aktor 1 abgestellt, wenn eine Ist-Stellung des zweiten Aktors auch nach Ablauf eines einstellbaren Zeitintervalls des Zeitglieds nicht einer Soll-Stellung des zweiten Aktors entspricht.

Wenn der als Stellglied einer Haltebremse ausgebildete zweite Aktor ein Bremsschütz ist, erfolgt auf diese Weise also eine Bremsschützüberwachung.

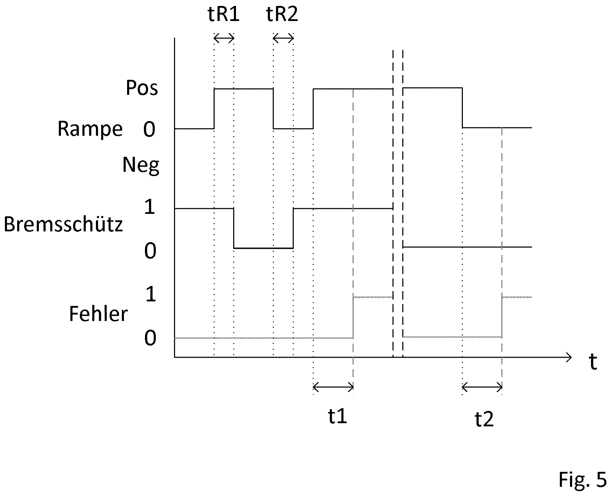

Figur 5 zeigt eine schematische Darstellung der mittels der fehlersicheren Steuerungseinheit 2 erfolgenden Bremsschützüberwachung. Mögliche Istbeziehungsweise Soll-Stellungen des Bremsschützes sind "nicht abgefallen" beziehungsweise "0" für eine geöffnete Bremse oder "abgefallen" beziehungsweise "1" für eine geschlossene Bremse.

Wenn der Aktor 1 ausgehend vom Stillstand eine Bewegung ausführen soll, wird der zugehörige Rampen-Soll-Wert von dem Rampengenerator auf einen parametrierbaren Wert begrenzt, um dem Umrichter 4 Zeit zu geben, die Bremse über das Bremsschütz zu öffnen. Zeitgleich wird ein Zeitglied gestartet, das überwacht, dass das Bremsschütz innerhalb eines parametrierbaren Zeitintervalls t1 seine Stellung in "nicht abgefallen" ändert. Das Zeitintervall t1 entspricht mindestens der Reaktionszeit tR1 des Bremsschützes, wobei sich sowohl t1 als auch tR1 auf die entsprechende Änderung des Rampen-Soll-Werts beziehen. Wenn sich mit Ablauf der Reaktionszeit tR1 und damit innerhalb von t1 die Stellung in "nicht abgefallen" geändert, entspricht dies in Figur 5 dem Fehler-Wert "0". Für den Fehler-Wert "0" ist t1 zur besseren Übersichtlichkeit nicht dargestellt, sondern nur tR1. Wenn das auch als Überwachungszeit bezeichnete Zeitintervall t1 überschritten wird, ohne dass sich die Stellung in "nicht abgefallen" ändert, wird dies als defektes Bremsschütz oder als Defekt im Drehzahlsteller erkannt. Dies entspricht in Figur 5 dem Fehler-Wert "1".

Entsprechendes gilt, wenn nach dem Abschluss der Bewegung des treibenden Aktors 1 der Rampen-Soll-Wert "0" wieder erreicht. Dann wird zeitgleich ein Zeitglied gestartet, das überwacht, dass das Bremsschütz innerhalb eines parametrierbaren Zeitintervalls t2 die Stellung in "abgefallen" ändert. Wenn sich mit Ablauf der Reaktionszeit tR2 und damit innerhalb von t2 die Stellung in "abgefallen" geändert, entspricht dies in Figur 5 dem Fehler-Wert "0". Für den Fehler-Wert "0" ist t2 zur besseren Übersichtlichkeit nicht dargestellt, sondern nur tR2.Wenn das entsprechende Zeitintervall t2 überschritten wird, ohne dass sich die Stellung in "abgefallen" ändert, wird dies auch hier als defektes Bremsschütz oder als Defekt im Drehzahlsteller erkannt. Dies entspricht in Figur 5 dem Fehler-Wert "1". Auch das Zeitintervall t2 entspricht mindestens der Reaktionszeit tR2 des Bremsschützes, wobei sich sowohl t2 als auch tR2 auf die entsprechende Änderung des Rampen-Soll-Werts beziehen. Die Zeitintervalle t1 und t2 können gleich oder verschieden lang sein.

Bezugszeichenliste

| | |
|---|---|
| 1 | Aktor |
| 1a | Elektromotor |
| 2 | fehlersichere Steuerungseinheit |
| 2a | Steuerleitung |
| 3 | Sensorik |
| 3a | Hardware-Kanal |
| 3b | Auswerteeinheit |
| 3c | Geschwindigkeitssensor |
| 3d | Wegerfassungssensor |
| 4 | Umrichter |

## Patentansprüche

1. Verfahren zur Steuerung eines Aktors (1) einer Winde, eines Hebezeugs oder eines Krans, wobei der Aktor (1) über eine fehlersichere Steuerungseinheit (2) angesteuert wird, **dadurch gekennzeichnet, dass** in der fehlersicheren Steuerungseinheit (2) Soll-Werte berechnet werden, auf deren Basis der Aktor (1) angesteuert wird, wobei auf eine Rückführung von Ist-Werten an die fehlersichere Steuerungseinheit (2) über einen Hardware-Kanal (3a) einer Sensorik (3) verzichtet wird und insbesondere eine geberlose Überwachung erfolgt.

2. Verfahren nach Anspruch 1, **dadurch gekennzeichnet, dass** der Aktor (1) mittels der fehlersicheren Steuerungseinheit (2) überwacht wird und zur Überwachung des Aktors (1) in der fehlersicheren Steuerungseinheit (2) die Soll-Werte, auf deren Basis der Aktor (1) angesteuert wird, mit Ist-Werten verglichen werden, die über eine Sensorik (3) ermittelt werden.

3. Verfahren nach Anspruch 2, **dadurch gekennzeichnet, dass** die Berechnung der Soll-Werte, die Ermittlung der Ist-Werte und der Vergleich der Soll-Werte mit den Ist-Werten jeweils zyklisch erfolgt.

4. Verfahren nach einem der Ansprüche 2 bis 3, **dadurch gekennzeichnet, dass** ein einstellbares Zeitintervall eines Zeitglieds gestartet und das eingestellte Zeitintervall abgewartet wird, wenn die Ist-Werte einen relativ zu den Soll-Werten vorgegebenen Toleranzbereich verlassen, und der überwachte Aktor abgestellt wird, wenn die Ist-Werte auch nach Ablauf des Zeitintervalls außerhalb des Toleranzbereichs liegen.

5. Verfahren nach einem der Ansprüche 1 bis 4, **dadurch gekennzeichnet, dass** der angesteuerte und insbesondere überwachte Aktor (1) ein treibender Aktor (1) ist und zusätzlich über die fehlersichere Steuerungseinheit (2) ein zweiter Aktor angesteuert und überwacht wird, der zweite Aktor als Stellglied einer Haltebremse ausgebildet ist, zur Steuerung und Überwachung des zweiten Aktors in Abhängigkeit der für den treibenden Aktor (1) berechneten Soll-Werte ein einstellbares Zeitintervall eines Zeitglieds gestartet und das eingestellte Zeitintervall abgewartet wird, und der treibende Aktor (1) abgestellt wird, wenn eine Ist-Stellung des zweiten Aktors auch nach Ablauf des Zeitintervalls nicht einer Soll-Stellung des zweiten Aktors entspricht.

6. Verfahren nach einem der Ansprüche 1 bis 5, **dadurch gekennzeichnet, dass** der angesteuerte und insbesondere überwachte Aktor (1) ein treibender Aktor (1) ist und zusätzlich über die fehlersichere Steuerungseinheit (2) ein Endschalter in Abhängigkeit der für den treibenden Aktor (1) berechneten Soll-Werte überwacht wird und insbesondere der treibende Aktor (1) verlangsamt oder abgestellt wird, wenn eine Ist-Stellung des überwachten Endschalters bei Erreichen eines vorgegebenen Soll-Werts des treibenden Aktors (1) nicht einer Soll-Stellung des Endschalters entspricht.

7. Verfahren nach einem der vorhergehenden Ansprüche, **dadurch gekennzeichnet, dass** der angesteuerte und insbesondere überwachte Aktor (1) Teil eines frequenzumrichtergesteuerten Elektromotors (1a) oder Teil eines polumschaltbaren und insbesondere netzgeführten Elektromotors ist, der als Antriebsmotor für eine Winde, ein Hebezeug oder einen Kran dient.

8. System zur Steuerung und insbesondere Überwachung eines Aktors (1) einer Winde, eines Hebezeugs oder eines Krans, und einer fehlersicheren Steuerungseinheit (2), wobei der Aktor (1) über die fehlersichere Steuerungseinheit (2) angesteuert und insbesondere überwacht werden kann, **dadurch gekennzeichnet, dass** das System ausgebildet und eingerichtet ist, um ein Verfahren gemäß einem der vorhergehenden Ansprüche durchzuführen.

4
1, 1a
2a
3b
3c
2
3
3a
Sollwert-
vorgabe
durch Funk-
steuerung
Rampen-
berechnung
im Umrichter
Überwachung
der
Geschwindig-
keit in
fehlersicherer
Steuerung

Fig. 1

4
1, 1a
2a
3b
3d
2
3
3a
Sollwert-
vorgabe
durch Funk-
steuerung
Rampen/
Positions-
berechnung
in fehler-
sicherer
Steuerung
Rampen-
ausgabe an
Umrichter

Fig. 2

Soll-Geschwindigkeit
t
P1
P2
P3
P4
P5
P6
P7

Fig. 3

Ist-Wert
Soll-Wert
Hysterese
t
10000
Position
0
1
Fehler
0


Fig. 4

Pos
Rampe
0
Neg
1
Bremsschütz
0
1
Fehler
0
tR1
tR2
t1
t2
t

Fig. 5

# EUROPÄISCHER RECHERCHENBERICHT

Nummer der Anmeldung
EP 22 15 6193

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Kutzelmann Peter: "Kernkompetenz feldorientierte Regelung", , 30. März 2013 (2013-03-30), Seiten 64-68, XP055930694, Gefunden im Internet: URL:https://www.iee-online.de/wp-content/uploads/sites/9/2013/04/IEE_2013_3_web.pdf [gefunden am 2022-06-13] * das ganze Dokument * ----- | 1 | INV. B66D1/46 B66D1/54 B66C13/26 |
| X | Anonymous: "300-Tonnen-Kran mit neuem Antrieb von ABB: Schwergewicht wird wieder fit - INDUSTRIAL Production ONLINE", , 9. November 2012 (2012-11-09), Seiten 1-4, XP055930532, Gefunden im Internet: URL:https://www.industrial-production.de/antriebstechnik/praezise-positionieren--ohne-lastsacken.htm [gefunden am 2022-06-13] * das ganze Dokument * ----- | 1 | |
| | | | RECHERCHIERTE SACHGEBIETE (IPC) |
| X | Demag: "Frequenzumrichter Dedrive Pro 880", , 15. Dezember 2017 (2017-12-15), Seiten 1-8, XP055930541, Gefunden im Internet: URL:https://www.demag.nl/wp-content/uploads/2018/09/componenten_frequentieregelaars_dedrivepro880_21376544_0717_DE.pdf [gefunden am 2022-06-13] * das ganze Dokument * ----- -/-- | 1 | B66D B66C |

Der vorliegende Recherchenbericht wurde für alle Patentansprüche erstellt

1

| Recherchenort | Abschlußdatum der Recherche | Prüfer |
|---|---|---|
| Den Haag | 14. Juni 2022 | Sheppard, Bruce |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches
Patentamt
European
Patent Office
Office européen
des brevets

# EUROPÄISCHER RECHERCHENBERICHT

Nummer der Anmeldung
EP 22 15 6193

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 601 31 231 T2 (KCI KONECRANES PLC [FI]) 15. Mai 2008 (2008-05-15)<br>* Zusammenfassung *<br>* Seite 2 *<br>* Abbildungen *<br>----- | 1-8 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| Den Haag | 14. Juni 2022 | Sheppard, Bruce |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 15 6193

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2022

| Im Recherchenbericht angeführtes Patentdokument | Datum der Veröffentlichung | Mitglied(er) der Patentfamilie | Datum der Veröffentlichung |
|---|---|---|---|
| DE 60131231 T2 | 15-05-2008 | DE 60131231 T2 | 15-05-2008 |
| | | EP 1190980 A2 | 27-03-2002 |
| | | ES 2292552 T3 | 16-03-2008 |
| | | US 2002033481 A1 | 21-03-2002 |

EPO FORM P0461

Für nähere Einzelheiten zu diesem Anhang : siehe Amtsblatt des Europäischen Patentamts, Nr.12/82